Europäisches Patentamt

European Patent Office

Office européen des brevets

(19)

(11) Veröffentlichungsnummer : **0 340 396 B1**

# (12) EUROPÄISCHE PATENTSCHRIFT

(45) Veröffentlichungstag der Patentschrift :
**17.06.92 Patentblatt 92/25**

(51) Int. Cl.$^5$ : **A23J 3/26**, A23J 3/10

(21) Anmeldenummer : **89102727.8**

(22) Anmeldetag : **17.02.89**

(54) **Verfahren und Vorrichtung zur Herstellung von Caseinaten.**

(30) Priorität : **04.05.88 DE 3815113**

(43) Veröffentlichungstag der Anmeldung :
**08.11.89 Patentblatt 89/45**

(45) Bekanntmachung des Hinweises auf die
Patenterteilung :
**17.06.92 Patentblatt 92/25**

(84) Benannte Vertragsstaaten :
**BE CH DE FR GB LI NL**

(56) Entgegenhaltungen :
**EP-A- 0 169 106**
**EP-A- 0 247 926**
**FR-A- 2 287 177**
**FR-A- 2 340 054**
**GB-A- 2 148 902**

(73) Patentinhaber : **Werner & Pfleiderer GmbH**
**Theodorstrasse 10 Postfach 30 12 20**
**W-7000 Stuttgart 30 (DE)**

(72) Erfinder : **Oelsner, Wolfgang, Dipl.-Ing.**
**Mühlstrasse 19 A**
**W-7000 Stuttgart 30 (DE)**

(74) Vertreter : **Schneck, Herbert, Dipl.-Phys., Dr. et al**
**Rau & Schneck Patentanwälte Königstrasse 2**
**W-8500 Nürnberg 1 (DE)**

EP 0 340 396 B1

**Beschreibung**

Die Erfindung richtet sich auf ein Verfahren und eine Vorrichtung zur Herstellung von Caseinaten umfassend das Einbringen von Casein, Laugen bzw. basischen Salzen und Wasser in eine Extrusionsvorrichtung, wobei die Komponenten durchmischt werden und anschließend unter Einwirkung von Rückförderelementen eine Druck- und Temperaturerhöhung erfahren.

Ein derartiges Verfahren ist aus der DE-PS 33 40 116 bekannt. Bei diesem vorbekannten Verfahren wird die Mischung aus Casein und Reagenzien durch die Einwirkung von Rückförderelementen unter Druck- und Temperaturaufbau einer chemischen Reaktion und Sterilisierung unterworfen. Im Anschluß an die Rückförderelemente befindet sich noch eine Förderzone, an deren Ende ein erneuter Druckaufbau aufgrund einer Extrusionsdüse erfolgt. Durch diese Düse wird das Ausgangsprodukt extrudiert.

Aus der DE-OS 27 42 083 ist ein Verfahren bekannt, bei welchem das Produkt mit relativ geringer Ausgangsfeuchtigkeit verarbeitet wird, wobei jedoch der dem Extruder zugeführten Mischung eine Inertgas freisetzende Substanz beigemischt wird, wobei dieses eine Schutzgaswirkung auf das Produkt ausüben und Wärmeschädigungen verhindern soll. Bei diesem vorbekannten Verfahren sind keine Rückförderelemente vorgesehen und am Extruderausgang befindet sich eine Extrusionsdüse.

Aus der GB-PS 20 53 788 ist ein am Extruderende eines Nahrungsmittelextruders angeordnetes Mischelement bekannt, welches eine Unterbrechung des Förderflusses bewirkt und der austragsseitigen Düse vorgeordnet ist.

Bei den bekannten Verfahren zur Kochextrusion von Caseinaten erfolgt die Extrusion durch Düsenbohrungen, wobei die so erzeugten Stränge anschließend granuliert werden. Dies erfordert sehr hohe Schneidgeschwindigkeiten mit Umdrehungen von über 4500 pro Minute. Dabei besteht die Gefahr einer Agglomeratbildung in der Schutzhaube bei der austragsseitigen Granulierung.

Alternativ hierzu kann die Extrusion durch Düsenbohrungen direkt in ein Vakuumtunnel erfolgen. Dieses Verfahren hat den Nachteil, störanfällig zu sein, z. B. beim Anfahren und Schneiden im Tunnel und einen relativ großen Platzbedarf einzunehmen.

Bei den vorbekannten Verfahren ist außerdem der Produktwassergehalt in der Größenordnung von 18 bis 21 % relativ hoch, so daß es schwer ist, die gewünschte Endkonsistenz zu erreichen.

Hiervon ausgehend liegt der Erfindung die Aufgabe zugrunde, ein Verfahren und eine Vorrichtung zur Herstellung von Caseinat-Produkten zu schaffen, bei welcher eine gesonderte, dem Extruder ausstragsseitig nachgeordnete Einrichtung zur Zerkleinerung des Produkts entbehrlich ist.

Diese Aufgabe wird bei einem Verfahren der eingangs genannten Art dadurch gelöst, daß der Druckaufbau unter Einwirkung von Rückförderelementen oder rückfördernden Knetblökken unmittelbar vor dem ausstragsseitigen Ende des Extruders erfolgt und das Produkt durch dieses Ende des Extruders frei ausgetragen wird.

Überraschenderweise zeigt sich, daß auf diese Weise Caseinat in zerkleinerter Form ausgetragen wird, obwohl das Caseinat im heißplastischen Zustand eine ausserordentlich zähe und klebrige Konsistenz aufweist. Zudem kann ein Austrag zerkleinerten Caseinats unabhängig von der speziell eingesetzten Neutralisierungsreaktion für das Casein erreicht werden.

Das erfindungsgemäß vorgesehene Verfahren wird auch strengen hygienischen Vorschriften gerecht, weil eine hinreichende Sterilisierung erreicht werden kann und keine hygienischen Probleme in einer stromabwärts gelegenen Zerkleinerungsanlage auftreten. Zudem ist das erfindungsgemäße Verfahren betriebssicher und problemlos realisierbar bei säuregefälltem Casein in Pulveroder Granulatform mit einem Feuchtegehalt bis zum 20 % und bei Einsatz von Reagenzien wie Natronlauge, Calciumoxid, Calciumhydroxid, Natriumcarbonat und dergleichen, welche in Pulverform, als Suspension oder Lösung zudosiert werden können.

Die ausstragsseitige Zerteilung des Produkts beruht auf der plötzlich erfolgenden Volumenänderung, wobei das Abschnüren des Stranges im Zwickelbereich der Extruder-Schnecke erfolgt und begünstigt wird durch die an sich bekannte, schlagartig auftretende Expansion aufgrund des unter Druck stehenden Wasseranteils im Caseinat. Das expandierte, zerkleinerte Produkt wird aus dem offenen Extruder einfach herausgeschleudert und kann direkt von einer Fördereinrichtung übernommen werden.

Es ist zwar bei der Herstellung von Phenolharzpressmassen in einem Extruder an sich bekannt, diese offen auszutragen, wobei diese dann in Schollenform am austragsseitigen Ende des Extruders herausfallen. Bei derartigen Phenolharzpressmassen treten aber die spezifischen Probleme der Caseinatherstellung nicht auf, insbesondere wird bei diesen bekannten Verfahren auch nicht ein Druckaufbau durch unmittelbar vor dem austragsseitigen Ende angeordnete Rückförder- bzw. Knetelemente realisiert.

Bei der Durchführung des erfindungsgemäßen Verfahrens ist vorzugsweise ein Wassergehalt zwischen 6 und 15 % vorgesehen. Ein derart niedriger Wassergehalt begünstigt die Erzielung der gewünschten Konsistenz des Ausgangsprodukts.

Insbesondere kann der Anteil des gesondert zugegebenen Wassers zwischen 0 und 18 % bezogen auf

2

die Gesamtmenge des Gemisches im Extruder betragen. Dies bedeutet, daß über die natürliche Ausgangsfeuchte der eingesetzten Produkte hinaus nicht notwendigerweise Wasser zugegeben werden muß, vorzugsweise aber innerhalb des genannten, beschränkten Rahmens zugegeben wird.

Der Druck am austragsseitigen Ende beträgt günstigerweise bis 25 bar, die Temperatur ca. 100 bis 140°C. Aufgrund dieser Druck- und Temperaturverhältnisse wird eine zuverlässige Produktsterilisierung und eine trokken-körnige Endkonsistenz erreicht.

Die Erfindung betrifft auch eine Vorrichtung zur Durchführung des erfindungsgemäßen Verfahrens umfassend einen Extruder mit einem Produkteinzugsbereich, einem Mischbereich und einem Bereich mit Rückförderelementen, wobei erfindungsgemäß vorgesehen ist, daß die Rückförderelemente bzw. rückfördernde Knetblöcke unmittelbar vor dem austragsseitigen Ende des Extruders angeordnet sind und das austragsseite Ende des Extruders im wesentlichen ohne Querschnittsverminderung gegenüber dem freien Extruderquerschnitt offen ist. Vorzugsweise ist der Extruder als gleichsinnig angetriebener, zweiwelliger Schneckenextruder ausgebildet.

Das Rückförderelement, d.h. ein entgegen der Förderrichtung der Förderschnecken fördernder Schneckenabschnitt mit einer Steigung umgekehrten Vorzeichens umfassend eine oder mehrere Schneckenwindungen. Günstigerweise ist vorgesehen, daß das Rückförderelement eine Länge von 0,5 bis 1,0 Schneckendurchmesser und eine Steigung von 0,5 bis 1,0 Schneckendurchmesser aufweist.

Die Stirnfläche des austragsseitigen Endes des Rückförderelementes und die Stirnfläche des austragsseitigen Endes des Gehäuses liegen unter Vermeidung von Totraum auf einer Ebene. Dies bedeutet, daß die Förderschnecken am austragsseitigen Ende nicht wie üblich konisch auslaufen, wobei zwischen den zylinderförmigen Gehäusewänden und dem Schneckenkonus ein Totraum verbleibt, sondern daß das austragsseitige Ende praktisch wie bei Durchführung eines Schnitts durch Gehäuse und Schnecken bzw. Rückförderelemente ausgebildet ist, so daß sich die Rückförderelemente radial bis ganz nach außen erstrecken. Hierdurch wird der für die gewünschte Austragskonfektionierung in Form von Granulat erforderliche Druckaufbau bis hin zum äußersten Gehäuseende gewährleistet.

Zur Vermeidung von Totraum ist weiterhin vorgesehen, daß die Rückförderelemente auf der Schneckenwelle mittels einer stirnseitig versenkten Schraube befestigt sind.

Durch die vorstehend beschriebene, konstruktive Ausgestaltung des austragsseitigen Endbereiches wird erreicht, daß das Casein vollständig zu Caseinat reagiert und sterilisiert wird. Die entstehende Reaktionswärme kann über eine Kühlung des Extrudergehäuses bzw. über kühlbare Schneckenwellen in an sich bekannter Weise abgeführt werden.

Weitere Merkmale, Vorteile und Einzelheiten der Erfindung ergeben sich aus der folgenden Beschreibung eines bevorzugten Ausführungsbeispiels anhand der Zeichnung. Dabei zeigen:

Fig. 1 einen schematischen Längsschnitt durch einen erfindungsgemäßen Extruder und

Fig. 2 eine Fig. 1 entsprechende Darstellung des austragsseitigen Endes des Gehäuses.

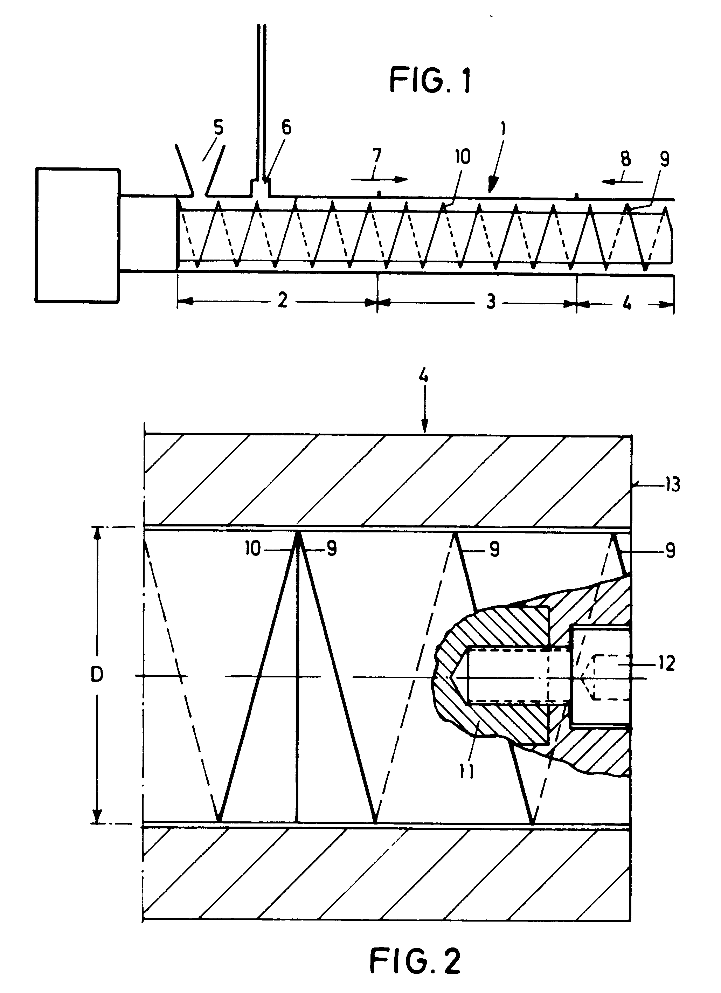

In Fig. 1 ist schematisch ein Extruder 1 dargestellt, welcher im Ausführungsbeispiel drei miteinander verschraubte Gehäuseabschnitte, sogenannte Gehäuseschüsse 2, 3 und 4 umfaßt.

In dem Gehäuseschuß 2 ist der Produkteinzugsbereich ausgebildet, wobei über die schematisch angedeutete Zugabeeinrichtung 5 Casein mit Natronlauge bzw. alkalischen Salzen und über die Zugabeleitung 6 gesondertes Wasser zugegeben werden.

Bei dem Extruder 1 handelt es sich im Ausführungsbeispiel um einen Doppelschneckenextruder vom Typ ZSK 70 mit einer Schneckendrehzahl von 300 Umdrehungen pro Minute.

Die in den Produkteinzugsbereich (Gehäuseschuß 2) eingeführten Produkte werden in Richtung des Pfeils 7 weitertransportiert und in dem durch den Gehäuseschuß 3 gebildeten Mischbereich durchmischt.

Im Bereich des Gehäusesschusses 4 sind Rückförderelemente 9 angeordnet, welche für einen Druck- und Temparaturaufbau sorgen, indem sie auf das dort angelangende Produkt eine Rückförderkraft in Richtung des Pfeiles 8 einwirken lassen. Die Rückförderelemente 9 weisen eine Steigung umgekehrten Vorzeichens wie die übrige Förderschnecke 10 des Extruders 1 auf. Sie weisen eine Steigung von 0,5 bis 1,5 D (D = Schneckendurchmesser) und eine Länge von 0,5 bis 1,0 D auf.

Wie insbesondere aus Figur 2 deutlich wird, sind die Rückförderelemente auf die Schneckenwelle 11 mittels einer in dieser versenkten Imbusschraube 12 aufgeschraubt.

Die Rückförderelemente 9 erstrecken sich bis hin zur austragsseitigen Stirnfläche 13 des austragsseitigen Gehäuseschusses 4 über den ganzen Durchmesser des freien Gehäuseinnenraumes, so daß keinerlei Totraum verbleibt. Durch die versenkte Verschraubung wird verhindert, daß es im Befestigungsbereich zu Agglomeratbildungen kommt. Der freie Durchmesser D im Bereich der austragsseitigen Stirnfläche 13 des Gehäuses ist unverändert groß, d.h. es ist keinerlei Extrusionsdüse oder dergleichen, wie sie herkömmlicherweise bei der Kochextrusion von Caseinaten vorgesehen ist.

3

## Ausführungsbeispiel

Es ist ein Doppelschneckenextruder vom Typ ZSK 70 vorgesehen, der mit einer Schneckendrehzahl von 300 Umdrehungen pro Minute angetrieben wird.

Dem Extruder wird Säurecasein mit 9,5 % Wassergehalt und Wasser sowie wasserfreies Natriumcarbonat zugeführt.

Der Durchsatz beträgt 150 kg pro Stunde Casein, 4,8 kg pro Stunde Natriumcarbonat und 7 l pro Stunde Wasser.

Bei der Neutralisationsreaktion in der Druckaufbauzone vor den Rückförderelementen 9 wird der ph-Wert auf 6,6 bis 6,8 erhöht.

Die mechanische Energieeinleitung beträgt ca. 0,1 KWh/kg. Die Materialtemperatur in der Reaktionszone (Gehäuseschuß 4) beträgt 138° C, der Materialdruck 10 bar.

Austragsseitig wird ein granulatartiges Ausgangsprodukt erhalten, welches keinerlei weiterer Zerkleinerung bedarf. Das Produkt kann unmittelbar auf eine Transporteinrichtung überführt werden.

Das ausgetragene granulatartige Ausgangsprodukt weist eine Korngröße von 20 bis 30 mm Durchmesser bei einem Feuchtigkeitsgehalt von 6 bis 15 % auf.

## Patentansprüche

1. Verfahren zur Herstellung von Caseinaten umfassend das Einbringen von Casein, Laugen bzw. basischen Salzen und Wasser in eine Extrusionsvorrichtung, wobei die Komponenten durchmischt werden und anschließend unter Einwirkung von Rückförderelementen eine Druck- und Temperaturerhöhung erfahren, dadurch gekennzeichnet, daß der Druckaufbau unter Einwirkung von Rückförderelementen oder rückfördernden Knetblöcken unmittelbar vor dem austragsseitigen Ende des Extruders erfolgt und das Produkt durch dieses Ende des Extruders frei ausgetragen wird.

2. Verfahren nach Anspruch 1, dadurch gekennzeichnet, daß das Gemisch aus den Komponenten einen Wassergehalt zwischen 6 und 15 % aufweist.

3. Verfahren nach Anspruch 1, dadurch gekennzeichnet, daß der Anteil des gesondert zugegebenen Wassers zwischen 0 und 18 % bezogen auf die Gesamtmenge des Gemisches im Extruder beträgt.

4. Verfahren nach Anspruch 1, dadurch gekennzeichnet, daß der Druck vor dem austragsseitigen Ende bis 25 bar beträgt.

5. Verfahren nach Anspruch 1, dadurch gekennzeichnet, daß die Temperatur vor dem austragsseitigen Ende 100 bis 140° C beträgt.

6. Vorrichtung zur Durchführung des Verfahrens nach einem der Ansprüche 1 bis 5, umfassend einen Extruder mit einem Produkteinzugsbereich, einem Mischbereich und einem Bereich mit Rückförderelementen, dadurch gekennzeichnet, daß die Rückförderelemente (9) bzw. rückfördernde Knetblöcke unmittelbar vor dem austragsseitigen Ende (Stirnseite 13) des Extruders (1) angeordnet sind und das austragsseitge Ende des Extruders (1) im wesentlichen ohne Querschnittsverminderung gegenüber dem freien Extruderquerschnitt (D) offen ist.

7. Vorrichtung nach Anspruch 6, gekennzeichnet durch einen gleichsinnig angetriebenen, zweiwelligen Schnekkenextruder (1).

8. Vorrichtung nach Anspruch 6, dadurch gekennzeichnet, daß die Rückförderelemente (9) eine Länge von 0,5 bis 1,0 D aufweisen.

9. Vorrichtung nach Anspruch 6, dadurch gekennzeichnet, daß die Rückförderelemente (9) eine Steigung von 0,5 bis 1,5 D aufweisen.

10. Vorrichtung nach Anspruch 6, dadurch gekennzeichnet, daß die austragsseitige Stirnfläche der Rückförderelemente (9) und die Stirnfläche (13) des austragsseitigen Endes des Gehäuses unter Vermeidung von Totraum in einer Ebene liegen und die Rückförderelemente (9) sich über den gesamten Querscnnitt (D) des Gehäusebereiches 4 erstrecken.

11. Vorrichtung nach Anspruch 6, dadurch gekennzeichnet, daß das Rückförderelement (9) austragsseitig an der Schneckenwelle (11) mittels einer in deren Stirnfläche versenkten Schraube (12) befestigt ist.

## Claims

1. Method of preparing caseinates comprising the introduction of casein, alkaline solutions, or basic salts and water into an extruder, the constituents being thoroughly mixed together and then subjected to an increase in pressure and temperature under the influence of return elements, <u>characterized in that</u> the pressure build-up under the influence of return elements or return kneading units takes place directly in front of the discharge end of the extruder and the product is discharged freely through this end of the extruder.

2. Method according to claim 1, <u>characterized in that</u> the mixture of constituents has a water content of between 6 and 15 %.

3. Method according to claim 1, <u>characterized in that</u> the proportion of separately added water is between 0 and 18 % relative to the total quantity of mixture in the extruder.

4. Method according to claim 1, <u>characterized in that</u> the pressure in front of the discharge end is up to 25 bars.

5. Method according to claim 1, <u>characterized in that</u> the temperature in front of the discharge end is 100 to 140°C.

6. Apparatus for carrying out the method according to one of claims 1 to 5, comprising an extruder having a product feed zone, a mixing zone and a zone having return elements, <u>characterized in that</u> the return elements (9) or return kneading units are arranged directly in front of the discharge end (face 13) of the extruder (1) and the end of the extruder (1) on the discharge side is open essentially without any reduction in cross-section relative to the free cross-section (D) of the extruder.

7. Apparatus according to claim 6, <u>characterized by</u> a twin shaft screw-type extruder (1) driven in the same direction.

8. Apparatus according to claim 6, <u>characterized in that</u> the return elements (9) have a length equal to 0.5 to 1.0 D.

9. Apparatus according to claim 6, <u>characterized in that</u> the return elements (9) have a pitch equal to 0.5 to 1.5 D.

10. Apparatus according to claim 6, <u>characterized in that</u> the face of the return elements (9) at the discharge end and the face (13) of the discharge ende of the barrel, while avoiding dead space, lie in the same plane and the return elements (9) extend over the entire cross-section (D) of the barrel section (4).

11. Apparatus according to claim 6, <u>characterized in that</u> the return element (9) is attached, at the discharge end, to the screw shaft (11) by means of a screw (12) sunk in the face of this shaft.


## Revendications

1. Procédé de fabrication de caséinates, englobant l'introduction de caséine, de bains de soude caustique ou de sels basiques, et d'eau dans un dispositif d'extrusion, les constituants étant mélangés et subissant ensuite une augmentation de pression et de température, sous l'action d'éléments de transport à contre-courant, caractérisé en ce que la montée en pression s'effectue par l'action d'éléments de transport à contre-courant ou de blocs de pétrissage effectuant un transport à contre-courant, directement avant l'extrémité de sortie de l'extrudeuse, et en ce que le produit est extrait librement au travers de cette extrémité de l'extrudeuse.

2. Procédé selon la revendication 1, caractérisé en ce que le mélange des constituants présente une teneur en eau entre 6 et 15 %.

3. Procédé selon la revendication 1, caractérisé en ce que la part en eau rajoutée séparément est comprise entre 0 et 18 %, rapportée à la quantité totale du mélange dans l'extrudeuse.

4. Procédé selon la revendication 1, caractérisé en ce que la pression avant l'extrémité côté sortie, peut atteindre jusqu'à 25 bar.

5. Procédé selon la revendication 1, caractérisé en ce que la température avant l'extrémité côté sortie, atteint 100 à 140° C.

6. Installation pour la mise en oeuvre du procédé selon l'une des revendications 1 à 5, comprenant une extrudeuse qui comporte une zone d'alimentation en produits, une zone de mélange et une zone comportant des éléments de transport à contre-courant, caractérisée en ce que les éléments de transport à contre-courant (9) ou des blocs de pétrissage ayant une action de transport à contre-courant, sont disposés directement avant l'extrémité côté sortie (côté frontal 13) de l'extrudeuse (1), et en ce que l'extrémité côté sortie de l'extrudeuse (1) est ouverte, pratiquement sans réduction de section droite par rapport à la section droite libre (D) de l'extrudeuse.

7. Installation selon la revendication 6, caractérisée par une extrudeuse à vis (1) à deux arbres entraînés dans le même sens.

8. Installation selon la revendication 6, caractérisée en ce que les éléments de transport à contre-courant (9) présentent une longueur de 0,5 à 1,0 D.

9. Installation selon la revendication 6, caractérisée en que les éléments de transport à contre-courant (9) présentent un pas de 0,5 à 1,5 D.

10. Installation selon la revendication 6, caractérisée en ce que la surface frontale de l'extrémité côté sortie des éléments de transport à contre-courant (9), et la surface frontale (13) de l'extrémité côté sortie du carter, sont situées dans un même plan en évitant ainsi un espace mort, et en ce que les éléments de transport à contre-courant (9) s'étendent sur la totalité de la section droite (D) du tronçon de carter (4).

11. Installation selon la revendication 6, caractérisée en ce que l'élément de transport à contre-courant (9) est fixé sur le côté sortie, sur l'arbre de vis d'extrudeuse (11), au moyen d'une vis de fixation (12) noyée dans la surface frontale de celui-ci.

# FIG. 1

# FIG. 2